# EUROPÄISCHE PATENTANMELDUNG

(11) **EP 2 333 447 A2**
(43) Veröffentlichungstag der Anmeldung: **15.06.2011**
(21) Anmeldenummer: 10193589.8
(22) Anmeldetag: 03.12.2010
(51) Int. Cl.: F24H 1/00, F24H 1/22

(54) **Warmwasseranlage und Verfahren zum Bereitstellen von Warmwasser**

(30) Priorität: 05.12.2009 DE 102009057160
(71) Anmelder: Robert Bosch GmbH, 70442 Stuttgart (DE)
(72) Erfinder: Melo, Marco, 3810-190 Aveiro (PT)

(57) **Zusammenfassung**

Die Erfindung betrifft eine Warmwasseranlage (100) zur Bereitstellung von Warmwasser umfassend einen Gasbrenner (3), insbesondere einen internen Gasbrenner (3), und eine mit dem Gasbrenner (3) gekoppelte Wärmetauschereinrichtung (1), durch die das zu erwärmende Wasser über mindestens einen Strömungskanal (K) von einem Einlass (6) zu einem Auslass (4) strömt. Weiter betrifft die Erfindung ein Verfahren zum Bereitstellen von Warmwasser mittels einer Warmwasseranlage (100) mit einem Gasbrenner (3), umfassend ein Erwärmen eines eine Wärmetauschereinrichtung (1) über mindestens einen Strömungskanal (K) von einem Einlass (6) zu einem Auslass (4) durchströmendes Fluid mittels des Gasbrenners (3).

Es ist eine Aufgabe der Erfindung, eine Warmwasseranlage und ein Verfahren zum Bereitstellen von Warmwasser mittels einer Warmwasseranlage zu schaffen, welche energetisch optimiert sind und entsprechend weniger Energie bei gleicher Wärmeleistung benötigen.

Gekennzeichnet ist die Warmwasseranlage (100) dadurch, dass der mindestens eine Strömungskanal (K) mit einer Turbineneinheit (7) zur Erzeugung von elektrischer Energie durch das erwärmte Fluid fluidisch gekoppelt ist. Gekennzeichnet ist das Verfahren dadurch, dass zumindest ein Teil des erwärmten Fluids über eine Turbineneinheit (7) zur Erzeugung von elektrischer Energie geführt wird.

## Beschreibung

Die Erfindung betrifft eine Warmwasseranlage zur Bereitstellung von Warmwasser nach dem Oberbegriff des Anspruchs 1.

Zudem betrifft die Erfindung ein Verfahren zum Bereitstellen von Warmwasser mittels einer Warmwasseranlage mit einem Gasbrenner nach Anspruch 8.

Warmwasseranlagen, die warmes Wasser über Verbrennung von Brennstoffen bereitstellen, wie beispielsweise mittels Gasbrenner, sind aus dem Stand der Technik bekannt. Bei derartigen Warmwasseranlagen, wie beispielsweise bei Boilern, wird Kaltwasser mittels Verbrennungsenergie erwärmt und bereitgestellt. Dabei wird Gas als Brennstoff mittels eines Gasbrenners verbrannt. Die dabei entstehende Verbrennungswärme wird auf das in Leitungen vorbeiströmende Wasser übertragen.

Der Erfindung liegt die Aufgabe zugrunde, eine Warmwasseranlage und ein Verfahren zum Bereitstellen von Warmwasser mittels einer Warmwasseranlage zu schaffen, welche energetisch optimiert sind und entsprechend weniger Energie bei gleicher Wärmeleistung benötigen.

Erfindungsgemäß wird dies durch die Gegenstände mit den Merkmalen des Patentanspruches 1 und des Patentanspruchs 8 gelöst. Vorteilhafte Weiterbildungen sind den Unteransprüchen zu entnehmen.

Die erfindungsgemäße Warmwasseranlage zur Bereitstellung von Warmwasser umfassend einen Gasbrenner, insbesondere einen internen Gasbrenner, und eine mit dem Gasbrenner gekoppelte Wärmetauschereinrichtung, durch die das zu erwärmende Wasser über mindestens einen Strömungskanal von einem Einlass zu einem Auslass strömt, ist **dadurch gekennzeichnet, dass** der mindestens eine Strömungskanal mit einer Turbineneinheit zur Erzeugung von elektrischer Energie durch das erwärmte Fluid fluidisch gekoppelt ist.

In einer vorteilhaften Ausführungsform der vorliegenden Erfindung ist vorgesehen, dass der Strömungskanal über einen Bypasskanal mit der Turbineneinheit fluidisch gekoppelt ist.

In einer anderen vorteilhaften Ausführungsform der vorliegenden Erfindung ist vorgesehen, dass die Turbineneinheit als Dampfturbine ausgebildet ist.

Insbesondere sieht eine weitere Ausführungsform der vorliegenden Erfindung vor, dass ein Dampfauslass der Turbineneinheit mit einem Heizgasausgang der Wärmetauschereinrichtung fluidisch verbunden ist.

In einer bevorzugten Ausführungsform der vorliegenden Erfindung ist vorgesehen, dass ein Flüssigkeitsauslass der Turbineneinheit mit dem Auslass des Strömungskanals fluidisch verbunden ist.

In einer anderen Ausführungsform der erfindungsgemäßen Warmwasseranlage ist vorgesehen, dass ein Druckablassausgang der Turbineneinheit mit einem Kondenswasserausgang der Wärmetauschereinrichtung fluidisch verbunden ist.

Bei einer weiteren Ausführungsform ist vorgesehen, dass die Turbineneinheit einen Generator zum Erzeugen elektrischer Energie aufweist.

Das erfindungsgemäße Verfahren zum Bereitstellen von Warmwasser mittels einer Warmwasseranlage mit einem Gasbrenner, umfassend ein Erwärmen eines eine Wärmetauschereinrichtung über mindestens einen Strömungskanal von einem Einlass zu einem Auslass durchströmenden Fluids mittels des Gasbrenners, ist **dadurch gekennzeichnet, dass** zumindest ein Teil des erwärmten Fluids über eine Turbineneinheit zur Erzeugung von elektrischer Energie geführt wird.

In einer Ausführungsform des erfindungsgemäßen Verfahrens ist vorgesehen, dass zumindest ein Teilstrom abgezweigt und über die Turbineneinheit geführt wird, wobei der Teilstrom stromabwärts der Turbineneinheit zumindest teilweise dem Strömungskanal wieder zugeführt wird.

In noch einer weiteren Ausführungsform der vorliegenden Erfindung ist vorgesehen, dass der Teilstrom stromabwärts der Turbineneinheit in einem Auslassbereich des erwärmten Fluids zumindest teilweise dem Strömungskanal wieder zugeführt wird.

Mit der erfindungsgemäßen Warmwasseranlage und dem erfindungsgemäßen Verfahren werden insbesondere die folgenden Vorteile realisiert:

Durch ein Verfahren und eine Warmwasseranlage mit einer Turbineneinheit, die in den Strömungskanl integriert ist, ist eine Energieerzeugung realisiert. Auf diese Weise ist eine ökologische und ökonomische elektrisch betriebene Warmwasseranlage realisiert, welche ein Energieeinsparpotenzial während der Nutzung aufweist. Die Turbineneinheit, die vorzugsweise als Dampfturbine ausgebildet ist, ist mit einem Generator gekoppelt, welcher elektrische Energie erzeugt. Der Generator ist vor einem Ausfluss des Warmwassers angeordnet. Der erhitzte Wasserstrom wird zum Antrieb der Dampfturbine benutzt. Diese treibt den Generator an, wodurch Energie entsteht. Die Energie wird bevorzugt in elektrische Energie gewandelt. Die bei der Stromerzeugung generierte Energie wird in die Warmwasseranlage zurückgeführt und beispielsweise für Anzeigen und dergleichen verwendet, sodass die Warmwasseranlage unabhängig von einem externen Versorgungsnetz ist.

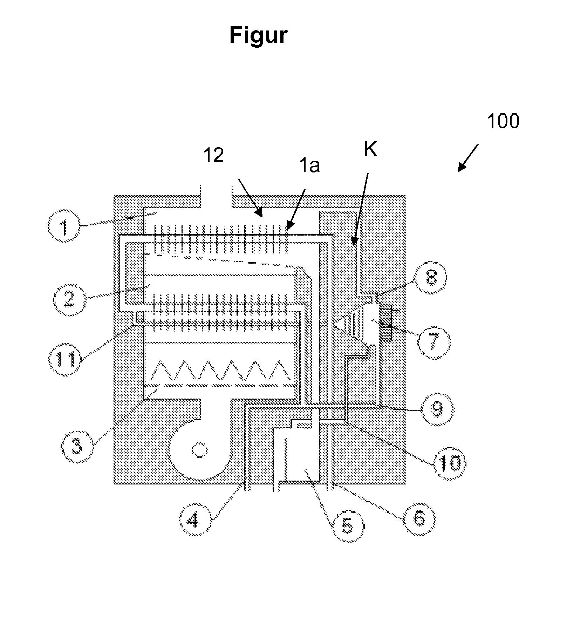

Die Zeichnung stellt ein Ausführungsbeispiel der Erfindung dar und zeigt in der Figur schematisch in einer geschnitten Seitenansicht den Aufbau einer erfindungsgemäßen Warmwasseranlage.

Die Fig. zeigt schematisch in einer geschnitten Seitenansicht den Aufbau einer erfindungsgemäßen Warmwasseranlage 100. Die Warmwasseranlage 100 ist zur Bereitstellung von Warmwasser ausgebildet und umfasst eine Wärmetauschereinrichtung 1, die mit einem Gasbrenner 3 gekoppelt ist. Genauer umfasst die Wärmetauschereinrichtung einen Kondenswäremtauscherabschnitt 1a und einen primären Wärmetauscherabschnitt 2, die in einem Gasbrennerstrang angeorndert sind. Durch die Wärmetauschereinrichtung 1 verläuft ein Strömungskanal K, durch den von einem Einlass 6 zu einem Auslass 4 Wasser strömt. Dabei verläuft der Strömungskanal K von dem Einlass 6 zu dem Kondenswärmetauscherabschnitt 1a und dann weiter zu dem primären Wärmetauscherabschnitt 2. In dem primäten Wärmetauscherabschnitt wird die von einem benachbart zu dem Wärmetauscherabschnitt 2 angeordneten Gasbrenner 3 erzeugte Wärme auf das den Wärmetauscherabschnitt 2 durchströmende Wasser übertragen. Um die Kondenswärme des Gasbrennerstrangs zu nutzen, wird diese in dem Kondenswärmetauscherabschnitt 1a ebenfalls auf das durchströmende Wasser übertragen. Im Bereich des primären Wärmetauscherabschnitts 2 wird der Strömungskanal K verzweigt, sodass parallel zu dem Strömungskanal K ein Bypasskanal 11 abgezweigt ist. Der Strömungskanal K verläuft zu dem Auslass 4. Der Bypasskanal 11 ist fluidisch mit einer Turbineneinheit 7, die als Dampfturbine ausgebildet ist, gekoppelt. Das den Bypasskanal durchströmende Wasserfluid treibt die Dampfturbine an. Der beim Antreiben resultierende Wasserdampf wird dem Kondenswärmetauscherabschnitt zugeführt und gemeinsam mit der Kondenswärme über einen Heizgasausgang 12 abgeführt. Das beim Antreiben resultierende Flüssigwasser wird zu dem Strömungskanal K geleitet, wo es sich mit dem den Strömungskanal K durchströmenden Wasser vermengt. Von der Turbineneinheit 7 zweigt weiter eine Ablassdruckleitung 10 ab, welche fluidisch mit einem Kondenswasserausgang 5 der Warmwasseranlage 100 gekoppelt ist. Die Dampfturbine 7 umfasst einen Generator zur Erzeugung von elektrischer Energie.

Somit wird durch den Bypass 11 das erwärmte Wasser durchgeführt, welches von dem Einlass 6 durch die Wärmetauschereinrichtung 1 durchgeleitet und erwärmt wird. In dem primären Wärmetauscherabschnitt 2 der Wärmetauschereinrichtung 1 wird das Wasser über den Gasbrenner 3 so erhitzt, dass das durch den Bypass 11 abgezweigte Wasser die Dampfturbinen antreibt und so Strom erzeugt wird. Das Flüssigwasser gelangt hinter der Turbineneinheit 7 wieder zu dem Strömungskanal K und erwärmt dort ggf. das in dem Strömungskanal K strömende Wasser weiter. Der Druck, der an der Turbineneinheit 7 herrscht, wird über eine Leitung zu dem Kondenswasserausgang 5 geleitet und unterstützt dort die Kondenswasserabfuhr. Der verbleibende Dampf wird von der Turbineneinheit 7 zu dem Heizgasausgang 12 geleitet und mit dem Heizgas weitergeführt.

## Patentansprüche

1. Warmwasseranlage (100) zur Bereitstellung von Warmwasser umfassend einen Gasbrenner (3), insbesondere einen internen Gasbrenner (3), und eine mit dem Gasbrenner (3) gekoppelte Wärmetauschereinrichtung (1), durch die das zu erwärmende Wasser über mindestens einen Strömungskanal (K) von einem Einlass (6) zu einem Auslass (4) strömt,
**dadurch gekennzeichnet, dass** der mindestens eine Strömungskanal (K) mit einer Turbineneinheit (7) zur Erzeugung von elektrischer Energie durch das erwärmte Fluid fluidisch gekoppelt ist.

2. Warmwasseranlage (100) nach Anspruch 1,
**dadurch gekennzeichnet, dass** der Strömungskanal (K) über einen Bypasskanal (11) mit der Turbineneinheit (7) fluidisch gekoppelt ist.

3. Warmwasseranlage (100) nach Anspruch 1 oder 2,
**dadurch gekennzeichnet, dass** die Turbineneinheit (7) als Dampfturbine ausgebildet ist.

4. Warmwasseranlage (100) nach einem der vorherigen Ansprüche 1 bis 3,
**dadurch gekennzeichnet, dass** ein Dampfauslass (8) der Turbineneinheit (7) mit einem Heizgasausgang (12) der Wärmetauschereinrichtung (1) fluidisch verbunden ist.

5. Warmwasseranlage (100) nach einem der vorherigen Ansprüche 1 bis 4,
**dadurch gekennzeichnet, dass** ein Flüssigkeitsauslass (9) der Turbineneinheit (7) mit dem Auslass (4) des Strömungskanals (K) fluidisch verbunden ist.

6. Warmwasseranlage (100) nach einem der vorherigen Ansprüche 1 bis 5,
**dadurch gekennzeichnet, dass** ein Druckablassausgang (10) der Turbineneinheit mit einem Kondenswasserausgang (5) der Wärmetauschereinrichtung (1) fluidisch verbunden ist.

7. Warmwasseranlage (100) nach einem der vorherigen Ansprüche 1 bis 6,
**dadurch gekennzeichnet, dass** die Turbineneinheit (7) einen Generator zum Erzeugen elektrischer Energie aufweist.

8. Verfahren zum Bereitstellen von Warmwasser mittels einer Warmwasseranlage (100) mit einem Gasbrenner (3), umfassend ein Erwärmen eines eine Wärmetauschereinrichtung (1) über mindestens einen Strömungskanal (K) von einem Einlass (6) zu einem Auslass (4) durchströmenden Fluids mittels des Gasbrenners (3),
**dadurch gekennzeichnet, dass** zumindest ein Teil des erwärmten Fluids über eine Turbineneinheit (7) zur Erzeugung von elektrischer Energie geführt wird.

9. Verfahren nach Anspruch 8,
**dadurch gekennzeichnet, dass** zumindest ein Teilstrom abgezweigt und über die Turbineneinheit (7) geführt wird, wobei der Teilstrom stromabwärts der Turbineneinheit (7) zumindest teilweise dem Strömungskanal (K) wieder zugeführt wird.

10. Verfahren nach Anspruch 8 oder 9,
**dadurch gekennzeichnet, dass** der Teilstrom stromabwärts der Turbineneinheit (7) in einem Auslassbereich des erwärmten Fluids zumindest teilweise dem Strömungskanal (K) wieder zugeführt wird.
